# EUROPEAN PATENT APPLICATION

(11) **EP 4 715 815 A1**
(43) Date of publication of application: **25.03.2026**
(21) Application number: 25202718.0
(22) Date of filing: 17.09.2025
(51) Int. Cl.: G10L 25/63, G10L 15/26, G06F 40/30, G10L 25/30

(54) **EMOTION ESTIMATION METHOD, INFORMATION PROCESSING DEVICE, AND NON-TRANSITORY STORAGE MEDIUM**

(30) Priority: 19.09.2024 JP 2024162679
(71) Applicant: TOYOTA JIDOSHA KABUSHIKI KAISHA, Toyota-shi, Aichi-ken 471-8571 (JP)
(72) Inventor: TACHIBANA, Ryosuke, Toyota-shi, 471-8571 (JP)
(74) Representative: D Young & Co LLP

(57) **Abstract**

An emotion estimation method that is executed by an information processing device (10) includes: acquiring voice data; determining whether the voice data includes linguistic information; and estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information. The first estimation model estimates the emotion based on the linguistic information. The second estimation model estimates the emotion without being based on the linguistic information.

## Description

### BACKGROUND OF THE INVENTION

### 1. Field of the Invention

The present disclosure relates to an emotion estimation method, an information processing device, and a non-transitory storage medium.

### 2. Description of Related Art

Conventionally, a technology of analyzing the content of a business talk is known. For example, Japanese Unexamined Patent Application Publication No. 2019-28910 (JP 2019-28910 A) discloses a dialogue analysis system for checking that a sales person explains matters that should be explained and does not say matters that must not be said in a business talk with a customer.

### SUMMARY OF THE INVENTION

The success and failure of the business talk can be related to the emotion of the customer. JP 2019-28910 A does not disclose that the emotion of the customer or the like is estimated by utilizing machine learning or the like. Further, without being limited to the business talk, the achievement of the estimation of the emotion from voice data can lead to the increase in quality about customer service and customer support, and the like. However, the emotion estimation technology has not been sufficiently studied before now. Thus, in the emotion estimation technology, there is room for improvement.

The present disclosure improves the emotion estimation technology.

A first aspect of the present disclosure is an emotion estimation method that is executed by an information processing device. The emotion estimation method includes: acquiring voice data; determining whether the voice data includes linguistic information; and estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information. The first estimation model estimates the emotion based on the linguistic information. The second estimation model estimates the emotion without being based on the linguistic information.

In the emotion estimation method according to the first aspect of the present disclosure, the first estimation model may be a model that estimates the emotion based on the linguistic information, paralinguistic information, and non-linguistic information.

In the emotion estimation method according to the first aspect of the present disclosure, the first estimation model may be a model that divides the voice data into first vector data corresponding to the paralinguistic information and the non-linguistic information and second vector data corresponding to the linguistic information. The first estimation model may be a model that estimates the emotion based on the first vector data and the second vector data.

In the emotion estimation method according to the first aspect of the present disclosure, the second estimation model may be a model that estimates the emotion based on at least one of paralinguistic information and non-linguistic information.

The emotion estimation method according to the first aspect of the present disclosure may further include estimating the emotion corresponding to the voice data by inputting the voice data to the second estimation model, when a verbal emotion and an actual emotion do not coincide with each other in a result estimated by the first estimation model.

An information processing device according to a second aspect of the present disclosure includes a control unit. The control unit is configured to acquire voice data, is configured to determine whether the voice data includes linguistic information, and is configured to estimate an emotion corresponding to the voice data by inputting the voice data to a first estimation model, when the voice data includes the linguistic information, or estimate the emotion corresponding to the voice data by inputting the voice data to a second estimation model, when the voice data does not include the linguistic information. The first estimation model estimates the emotion based on the linguistic information. The second estimation model estimates the emotion without being based on the linguistic information.

In the information processing device according to the second aspect of the present disclosure, the first estimation model may be a model that estimates the emotion based on the linguistic information, paralinguistic information, and non-linguistic information.

In the information processing device according to the second aspect of the present disclosure, the first estimation model may be a model that divides the voice data into first vector data corresponding to the paralinguistic information and the non-linguistic information and second vector data corresponding to the linguistic information. The first estimation model may be a model that estimates the emotion based on the first vector data and the second vector data.

In the information processing device according to the second aspect of the present disclosure, the second estimation model may be a model that estimates the emotion based on at least one of paralinguistic information and non-linguistic information.

In the information processing device according to the second aspect of the present disclosure, the control unit may estimate the emotion corresponding to the voice data by inputting the voice data to the second estimation model, when a verbal emotion and an actual emotion do not coincide with each other in a result estimated by the first estimation model.

A third aspect of the present disclosure is a non-transitory storage medium storing instructions that are executable by one or more processors included in a computer and that cause the one or more processors to perform functions. The functions includes: acquiring voice data; determining whether the voice data includes linguistic information; and estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

In the non-transitory storage medium according to the third aspect of the present disclosure, the first estimation model may be a model that estimates the emotion based on the linguistic information, paralinguistic information, and non-linguistic information.

In the non-transitory storage medium according to the third aspect of the present disclosure, the first estimation model may be a model that divides the voice data into first vector data corresponding to the paralinguistic information and the non-linguistic information and second vector data corresponding to the linguistic information. The first estimation model may be a model that estimates the emotion based on the first vector data and the second vector data.

In the non-transitory storage medium according to the third aspect of the present disclosure, the second estimation model may be a model that estimates the emotion based on at least one of paralinguistic information and non-linguistic information.

In the non-transitory storage medium according to the third aspect of the present disclosure, the functions may further include estimating the emotion corresponding to the voice data by inputting the voice data to the second estimation model, when a verbal emotion and an actual emotion do not coincide with each other in a result estimated by the first estimation model.

With the first to third aspects of the present disclosure, the emotion estimation technology is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a schematic configuration of a system according to an embodiment;
FIG. 2 is a flowchart showing the operation of an information processing device; and
FIG. 3 is a flowchart showing the operation of the information processing device.

### DETAILED DESCRIPTION OF EMBODIMENTS

Embodiments of the present disclosure will be described below.

### Outline of Embodiment

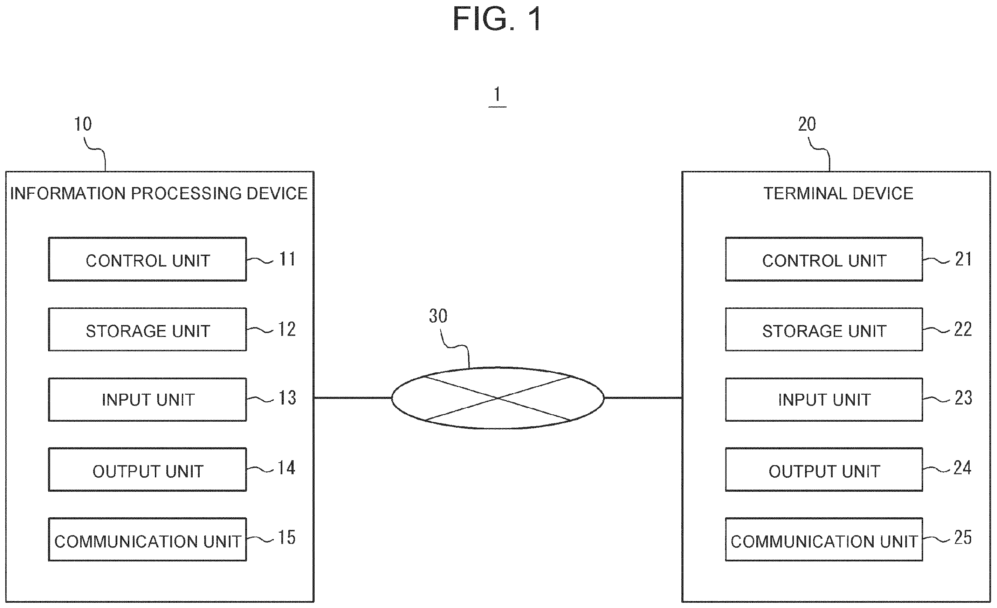

The outline and configuration of a system 1 according to an embodiment will be described with reference to FIG. 1. The system 1 according to the embodiment includes an information processing device 10 and a terminal device 20. The information processing device 10 and the terminal device 20 are connected so as to be capable of communicating with a network 30 including a mobile communication network and the internet, for example.

For example, the information processing device 10 is a server device that is installed in a datacenter or the like. For example, the information processing device 10 is a server that belongs to a cloud computing system or other computing systems. FIG. 1 shows an example in which the number of information processing devices 10 included in the system 1 is one, but the present disclosure is not limited to this. The system 1 may include two or more information processing devices 10.

The terminal device 20 is an arbitrary device that is used by each user. For example, general-purpose electronic equipment such as a smartphone, a tablet terminal, and a wearable terminal, or dedicated electronic equipment can be employed as the terminal device 20. FIG. 1 shows an example in which the number of terminal devices 20 included in the system 1 is one, but the present disclosure is not limited to this. The system 1 may include two or more terminal devices 20.

As an emotion estimation technology, in a supervised learning model in which a feature quantity extracted from voice data and an emotion label are used, the emotion about the voice data is estimated by one emotion estimation model, based on information (linguistic information, paralinguistic information, and non-linguistic information) relevant to the voice data. The linguistic information is information indicating the utterance content based on the voice data. The paralinguistic information is information indicating the emotion, attitude, intention, and others based on the voice data. The non-linguistic information is information about the age, sex, and others of an utterer based on the voice data.

In the emotion estimation technology in which the supervised learning model is used, one general-purpose emotion estimation model is used. However, an optimal estimation result is not always obtained depending on the content of the voice data. An emotion estimation technology according to the embodiment is roughly characterized in that the estimation process is executed with the switching among a plurality of estimation models instead of the use of one estimation model.

The outline of the emotion estimation technology according to the embodiment will be described below, and details will be described later. The emotion estimation technology according to the embodiment is executed by the information processing device 10. First, the information processing device 10 acquires the voice data about a business talk or the like. The information processing device 10 determines whether the voice data includes linguistic information. In the case where the voice data includes the linguistic information, the information processing device 10 estimates an emotion corresponding to the voice data, by inputting the voice data to a first estimation model that estimates the emotion based on the linguistic information. On the other hand, in the case where the voice data does not include the linguistic information, the information processing device 10 estimates the emotion corresponding to the voice data, by inputting the voice data to a second estimation model that estimates the emotion without being based on the linguistic information.

In this way, in the embodiment, the information processing device 10 determines whether the voice data includes the linguistic information, and estimates the emotion while performing the switching between the first estimation model and the second estimation model depending on the content of the voice data. Since an optimal estimation process depending on the content of the voice data can be executed in this way, the emotion estimation technology is improved.

Next, the configurations of the information processing device 10 and the terminal device 20 will be described in detail.

### Configuration of Information Processing Device

As shown in FIG. 1, the information processing device 10 includes a control unit 11, a storage unit 12, an input unit 13, an output unit 14, and a communication unit 15.

The control unit 11 includes at least one processor, at least one dedicated circuit, or a combination of them. The processor is a general-purpose processor such as a central processing unit (CPU) or a graphics processing unit (GPU), or a dedicated processor for a specific process. For example, the dedicated circuit is a field-programmable gate array (FPGA) or an application specific integrated circuit (ASIC). The control unit 11 executes processes related to the operation of the information processing device 10, while controlling parts of the information processing device 10.

The storage unit 12 includes at least one semiconductor memory, at least one magnetic memory, at least one optical memory, or a combination of at least two kinds of them. For example, the semiconductor memory is a random access memory (RAM) or a read only memory (ROM). For example, the RAM is static random access memory (SRAM) or a dynamic random access memory (DRAM). For example, the ROM is an electrically erasable programmable read only memory (EEPROM). For example, the storage unit 12 functions as a main storage device, an auxiliary storage device, or a caches memory. In the storage unit 12, data that is used for the operation of the information processing device 10 and data that is obtained by the operation of the information processing device 10 are stored.

For example, the first estimation model and the second estimation model are stored in the storage unit 12. As described above, the first estimation model is a model that estimates the emotion based on the linguistic information. Specifically, the first estimation model is a model that is created by a machine learning in which a machine learning algorithm is used. For example, the first estimation model may be a machine learning model that is built by adopting a decision tree as a base. The machine learning model that is built by adopting a decision tree as a base is LightGBM or XGBoost, for example, but is not limited to them. Alternatively, the machine learning model may be a model that is generated based on a machine learning algorithm for Convolutional Neural Network (CNN), Recurrent Neural Network (RNN), or other deep learnings. The first estimation model according to the embodiment outputs the emotion corresponding to the voice data, as an objective variable, based on explanatory variables relevant to the linguistic information, paralinguistic information, and non-linguistic information about the voice data.

On the other hand, the second estimation model is a model that estimates the emotion without being based on the linguistic information. Specifically, the second estimation model is a model that is created by a machine learning in which a machine learning algorithm is used. For example, the second estimation model may be a machine learning model that is built by adopting a decision tree as a base. The machine learning model that is built by adopting a decision tree as a base is LightGBM or XGBoost, for example, but is not limited to them. Alternatively, the machine learning model may be a model that is generated based on a machine learning algorithm for Convolutional Neural Network (CNN), Recurrent Neural Network (RNN), or other deep learnings. The second estimation model outputs the emotion corresponding to the voice data, as an objective variable, based on an explanatory variable relevant to at least one of the paralinguistic information and non-linguistic information about the voice data.

In the case where the voice data includes the linguistic information, it is preferable to use the first estimation model that estimates the emotion based on at least the linguistic information about the voice data. This is because there is a high possibility that the emotion can be estimated with high accuracy by estimating the emotion in consideration of the linguistic information about the voice data. On the other hand, in the case where the voice data does not include the linguistic information, it is preferable to use the second estimation model that estimates the emotion without being based on the linguistic information about the voice data. This is because an emotion estimation specialized for at least one of the paralinguistic information and the non-linguistic information can be executed by the second estimation model. As described above, in the emotion estimation technology according to the embodiment, whether the voice data includes the linguistic information is determined, and the emotion is estimated while the switching between the first estimation model and the second estimation model is performed depending on the content of the voice data. In this way, the optimal estimation process is executed depending on the content of the voice data.

The input unit 13 includes at least one input interface. For example, the input interface is a physical key, an electrostatic capacitance key, a pointing device, and a touch screen that is provided integrally with a display. Further, for example, the input interface may be a sound sensor that accepts a voice input, or a camera that accepts a gesture input. The input unit 13 accepts a manipulation for inputting the data that is used for the operation of the information processing device 10. The input unit 13 may be connected to the information processing device 10, as external input equipment, instead of being included in the information processing device 10. As the connection scheme, for example, an arbitrary scheme such as Universal Serial Bus (USB), High-Definition Multimedia Interface (HDMI (R)), or Bluetooth (R) can be used.

The output unit 14 includes at least one output interface. For example, the output interface is a display that outputs information by picture, or a speaker that outputs information by voice. For example, the display is a liquid crystal display (LCD) or an organic electroluminescence (organic EL) display. The output unit 14 outputs the data that is obtained by the operation of the information processing device 10. The output unit 14 may be connected to the information processing device 10, as external output equipment, instead of being included in the information processing device 10. As the connection scheme, for example, an arbitrary scheme such as USB, HDMI (R), or Bluetooth (R) can be used.

The communication unit 15 includes at least one exterior communication interface. The communication interface may be an interface for wire communication or may be an interface for wireless communication. In the case of the wire communication, the communication interface is an interface for Local Area Network (LAN) or Universal Serial Bus (USB), for example. In the case of the wireless communication, the communication interface is an interface that complies with a mobile communication standard such as Long Term Evolution (LTE), 4th generation (4G), or 5th generation (5G), or an interface that complies with a short-range wireless communication such as Bluetooth (R), for example. The communication unit 15 receives the data that is used for the operation of the information processing device 10, and sends the data that is obtained by the operation of the information processing device 10.

Functions of the information processing device 10 are realized when a program according to the embodiment is executed by a processor corresponding to the control unit 11. That is, the functions of the information processing device 10 are realized by software. The program causes a computer to execute the operation of the information processing device 10, and thereby, causes the computer to function as the information processing device 10. That is, the computer functions as the information processing device 10, by executing the operation of the information processing device 10 in accordance with the program. The computer may be an example of the information processing device 10.

In the embodiment, the program can be recorded in a computer-readable recording medium. The computer-readable recording medium includes a non-transitory computer-readable medium, and for example, is a magnetic recording device, an optical disc, a magneto-optical recording medium, or a semiconductor memory. For example, the distribution of the program is performed by the sale, transfer, or rental of a portable recording medium in which the program is recorded, as exemplified by a digital versatile disc (DVD) or a compact disc read only memory (CD-ROM). Further, the distribution of the program may be performed by storing the program in a storage of an external server and sending the program from the external server to other computers. Further, the program may be provided as a program product.

Some or all of the functions of the information processing device 10 may be realized by a dedicated circuit corresponding to the control unit 11. That is, some or all of the functions of the information processing device 10 may be realized by hardware.

### Configuration of Terminal Device

As shown in FIG. 1, the terminal device 20 includes a control unit 21, a storage unit 22, an input unit 23, an output unit 24, and a communication unit 25.

The control unit 21 includes at least one processor, at least one dedicated circuit, or a combination of them. The processor is a general-purpose processor such as a central processing unit (CPU) or a graphics processing unit (GPU), or a dedicated processor for a specific process. For example, the dedicated circuit is a field-programmable gate array (FPGA) or an application specific integrated circuit (ASIC). The control unit 21 executes processes related to the operation of the terminal device 20, while controlling parts of the terminal device 20.

The storage unit 22 includes at least one semiconductor memory, at least one magnetic memory, at least one optical memory, or a combination of at least two kinds of them. For example, the semiconductor memory is a random access memory (RAM) or a read only memory (ROM). For example, the RAM is static random access memory (SRAM) or a dynamic random access memory (DRAM). For example, the ROM is an electrically erasable programmable read only memory (EEPROM). For example, the storage unit 22 functions as a main storage device, an auxiliary storage device, or a caches memory. In the storage unit 22, data that is used for the operation of the terminal device 20 and data that is obtained by the operation of the terminal device 20 are stored.

The input unit 23 includes at least one input interface. For example, the input interface is a physical key, an electrostatic capacitance key, a pointing device, and a touch screen that is provided integrally with a display. Further, for example, the input interface may be a sound sensor that accepts a voice input, or a camera that accepts a gesture input. The input unit 23 accepts a manipulation for inputting the data that is used for the operation of the terminal device 20. The input unit 23 may be connected to the terminal device 20, as external input equipment, instead of being included in the terminal device 20. As the connection scheme, for example, an arbitrary scheme such as Universal Serial Bus (USB), High-Definition Multimedia Interface (HDMI (R)), or Bluetooth (R) can be used.

The output unit 24 includes at least one output interface. For example, the output interface is a display that outputs information by picture, or a speaker that outputs information by voice. For example, the display is a liquid crystal display (LCD) or an organic electroluminescence (organic EL) display. The output unit 24 outputs the data that is obtained by the operation of the terminal device 20. The output unit 24 may be connected to the terminal device 20, as external output equipment, instead of being included in the terminal device 20. As the connection scheme, for example, an arbitrary scheme such as USB, HDMI (R), or Bluetooth (R) can be used.

The communication unit 25 includes at least one exterior communication interface. The communication interface may be an interface for wire communication or may be an interface for wireless communication. In the case of the wire communication, the communication interface is an interface for Local Area Network (LAN) or Universal Serial Bus (USB), for example. In the case of the wireless communication, the communication interface is an interface that complies with a mobile communication standard such as Long Term Evolution (LTE), 4th generation (4G), or 5th generation (5G), or an interface that complies with a short-range wireless communication such as Bluetooth (R), for example. The communication unit 25 receives the data that is used for the operation of the terminal device 20, and sends the data that is obtained by the operation of the terminal device 20.

Functions of the terminal device 20 are realized when a program according to the embodiment is executed by a processor corresponding to the control unit 21. That is, the functions of the terminal device 20 are realized by software. The program causes a computer to execute the operation of the terminal device 20, and thereby, causes the computer to function as the terminal device 20. That is, the computer functions as the terminal device 20, by executing the operation of the terminal device 20 in accordance with the program.

Some or all of the functions of the terminal device 20 may be realized by a dedicated circuit corresponding to the control unit 21. That is, some or all of the functions of the terminal device 20 may be realized by hardware.

### Operation of Information Processing Device

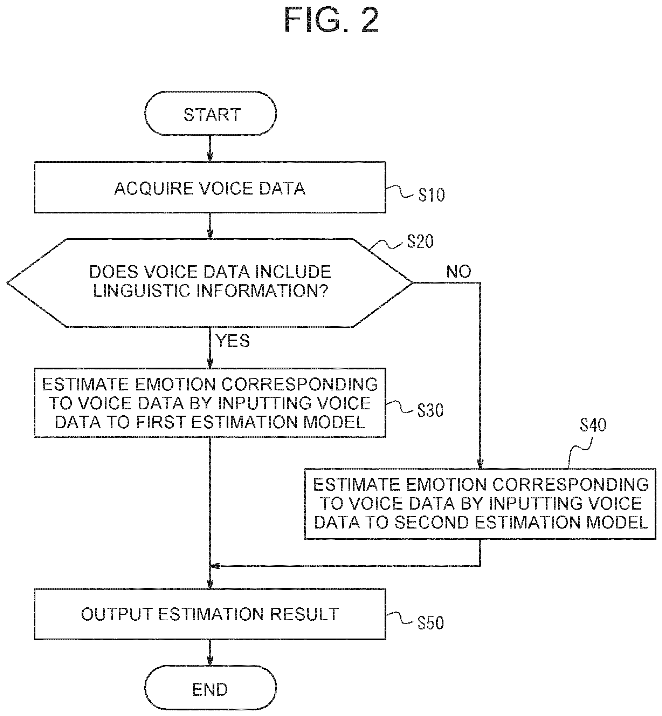

The operation of the information processing device 10 according to the embodiment will be described with reference to FIG. 2.

In the step S10, the control unit 11 of the information processing device 10 acquires the voice data.

For the acquisition of the voice data, an arbitrary technique can be employed. For example, the control unit 11 may acquire the voice data from an external device including the terminal device 20, through the communication unit 15 and the network 30. Further, for example, the control unit 11 may acquire the voice data through the input unit 13. The voice data includes the voice of a particular speaker at the time of a business talk, a meeting or the like. The voice data is not limited to this, and may include all kinds of data such as a presentation, a telephone talk with a customer, a customer support, a communication in the field of education, an interview, a daily conversation, and a voice post to a social media. For example, the particular speaker may be a customer, a staff, and the like that performs a business talk, or an arbitrary speaker. In the embodiment, the business talk is a business talk about vehicle sale, but is not limited to this. For example, the business talk may include meetings for various kinds of contract conclusions such as the trade of a real estate, the contract of an insurance product, and the sale of a financial product. In the embodiment, the emotion of one particular speaker in the voice data is estimated, but the present disclosure is not limited to this. For example, the emotions of a plurality of speakers in the voice data may be estimated.

In step S20, the control unit 11 determines whether the voice data includes the linguistic information.

For the process of determining whether the voice data includes the linguistic information, an arbitrary technique can be employed. For example, the control unit 11 may determine whether the voice data includes the linguistic information, by a voice recognition process, a transcription process, or the like for the voice data. In the case where the voice data includes the linguistic information, the process proceeds to step S30. In the case where the voice data does not include the linguistic information, the process proceeds to step S40.

In step S30, in the case where the voice data includes the linguistic information, the control unit 11 estimates the emotion corresponding to the voice data, by inputting the voice data to the first estimation model. As described above, the first estimation model is a model that estimates the emotion based on the linguistic information.

In step S40, in the case where the voice data does not include the linguistic information, the control unit 11 estimates the emotion corresponding to the voice data, by inputting the voice data to the second estimation model. As described above, the second estimation model is a model that estimates the emotion without being based on the linguistic information.

In step S50, the control unit 11 outputs the estimation result about the emotion corresponding to the voice data. Specifically, the control unit 11 outputs the estimation result estimated by the first estimation model in step S30 or the estimation result estimated by the second estimation model in step S40.

For the process of outputting the estimation result, an arbitrary technique can be employed. For example, the control unit 11 may send data about the estimation result to the terminal device 20 through the communication unit 15, and may output the estimation result through the output unit 24 of the terminal device 20. The control unit 21 may output the estimation result through a user interface that is displayed and output by the output unit 24. Alternatively, the control unit 11 may output the estimation result through a user interface that is displayed and output by the output unit 14.

As described above, the information processing device 10 according to the embodiment acquires the voice data, and determines whether the voice data includes the linguistic information. In the case where the voice data includes the linguistic information, the information processing device 10 according to the embodiment estimates the emotion corresponding to the voice data, by inputting the voice data to the first estimation model that estimates the emotion based on the linguistic information. In the case where the voice data does not include the linguistic information, the information processing device 10 according to the embodiment estimates the emotion corresponding to the voice data, by inputting the voice data to the second estimation model that estimates the emotion without being based on the linguistic information.

In this configuration, the information processing device 10 determines whether the voice data includes the linguistic information, and estimates the emotion while performing the switching between the first estimation model and the second estimation model depending on the content of the voice data. Since the optimal estimation process depending on the content of the voice data can be executed in this way, the emotion estimation technology is improved.

The first estimation model may execute a process of estimating two emotions: an expressive emotion and an underlying emotion. The expressive emotion is an emotion that is expressed through the linguistic information. In the embodiment, the expressive emotion is also referred to as a verbal emotion. The underlying emotion is an emotion or sensation in heart, and is an emotion that is not expressed as the linguistic information. In other words, the underlying emotion is an emotion that is expressed through at least one of the paralinguistic information and the non-linguistic information. In the embodiment, the underlying emotion is also referred to as an actual emotion. For example, the first estimation model may be a model that divides the voice data into first vector data corresponding the paralinguistic information and the non-linguistic information and second vector data corresponding to the linguistic information, and that estimates a difference in emotion (also referred to as an emotion gap, hereinafter) based on the first vector data and the second vector data. In the embodiment, such a model is also referred to as an emotion gap model. In the case where the first estimation model is the emotion gap model, it is possible to estimate the actual emotion by executing the emotion estimation process based on the first vector data, and it is possible to estimate the verbal emotion by executing the emotion estimation process based on the second vector data. Thereby, it is possible to estimate the emotion gap between the actual emotion and the verbal emotion.

In the emotion gap model, training may be performed based on a first loss function based on the difference between the linguistic information about the voice data and the first vector data, a second loss function based on a symmetric learning or asymmetric learning of the second vector data, and a third loss function that minimizes the mutual information content between the first vector data and the second vector data. The symmetric learning may include simCLR. Further, the asymmetric learning may include BYOL, SimSiam, or DINO. In the training relevant to the third loss function, CLUB or DiCy may be used.

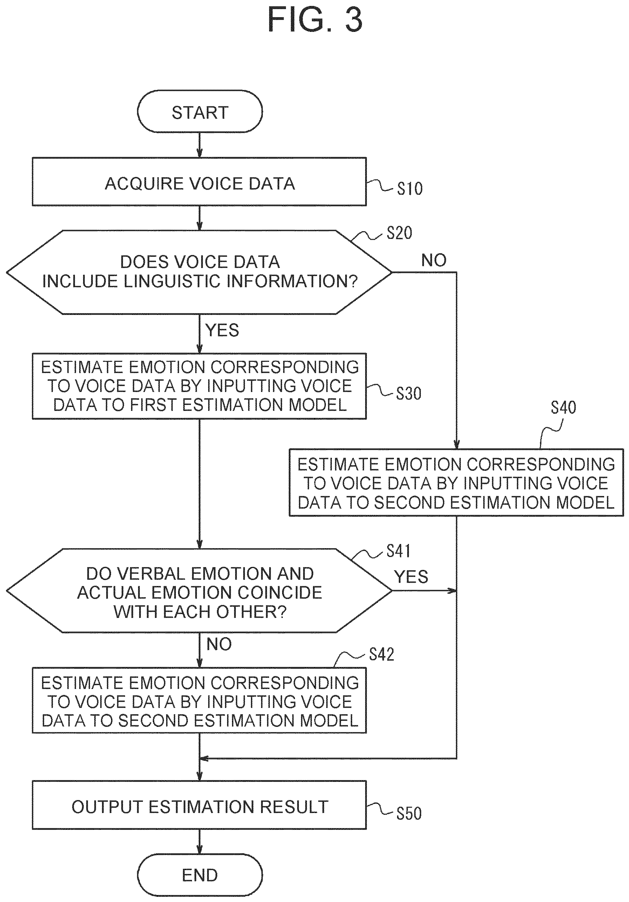

In the case where the first estimation model estimates the two emotions: the verbal emotion and the actual emotion and where the verbal emotion and the actual emotion do not coincide with each other, the emotion estimation may be executed by the second estimation model, and the result estimated by the second estimation model may be output. This is because there is a high possibility that the verbal emotion does not indicate the real emotion of the speaker in the case where the estimated verbal emotion and the estimated actual emotion are different from each other. In this case, the result estimated by the second estimation model that estimates the emotion without being based on the linguistic information may be output. FIG. 3 is a flowchart of the operation of the information processing device 10 for executing such a process. The same operations as those in FIG. 2 are denoted by the same reference characters, and descriptions thereof are omitted.

After step S30 in FIG. 3, in step S41, the control unit 11 of the information processing device 10 determines whether the verbal emotion and the actual emotion coincide with each other. In the case where the verbal emotion and the actual emotion coincide with each other, the process proceeds to step S50. In the case where the verbal emotion and the actual emotion do not coincide with each other, the process proceeds to step S42.

In step S42, in the case where the verbal emotion and the actual emotion do not coincide with each other, the control unit 11 estimates the emotion corresponding to the voice data, by inputting the voice data to the second estimation model.

The present disclosure has been described based on the drawings and the embodiment. Note that a person skilled in the art may perform various modifications and alterations based on the present disclosure. Accordingly, it is noted that the modifications and the alterations are included in the scope of the present disclosure. For example, functions and the like included in constituent portions, steps and others can be redisposed such that there is no logical inconsistency, and a plurality of constituent portions, steps and others can be combined to one or can be divided.

For example, it is allowable to adopt an embodiment in which the configuration and operation of the information processing device 10 in the above-described embodiment are distributed to a plurality of computers that can communicate with each other. Similarly, it is allowable to adopt an embodiment in which the configuration and operation of the terminal device 20 are distributed to a plurality of computers that can communicate with each other.

Some embodiments of the present disclosure will be exemplified below. It is noted that the embodiments of the present disclosure are not limited to them.

### Supplement 1

An emotion estimation method that is executed by an information processing device, the emotion estimation method comprising:
acquiring voice data;
determining whether the voice data includes linguistic information; and
estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

### Supplement 2

The emotion estimation method according to supplement 1, wherein the first estimation model is a model that estimates the emotion based on the linguistic information, paralinguistic information, and non-linguistic information.

### Supplement 3

The emotion estimation method according to supplement 1 or 2, wherein:
the first estimation model is a model that divides the voice data into first vector data corresponding to paralinguistic information and non-linguistic information and second vector data corresponding to the linguistic information; and
the first estimation model is a model that estimates the emotion based on the first vector data and the second vector data.

### Supplement 4

The emotion estimation method according to any one of supplements 1 to 3, wherein the second estimation model is a model that estimates the emotion based on at least one of paralinguistic information and non-linguistic information.

### Supplement 5

The emotion estimation method according to any one of supplements 1 to 4, comprising estimating the emotion corresponding to the voice data by inputting the voice data to the second estimation model, when a verbal emotion and an actual emotion do not coincide with each other in a result estimated by the first estimation model.

### Supplement 6

An information processing device comprising a control unit, wherein
the control unit is configured to
acquires voice data,
determines whether the voice data includes linguistic information, and
estimates an emotion corresponding to the voice data by inputting the voice data to a first estimation model, when the voice data includes the linguistic information, or estimates the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

### Supplement 7

The information processing device according to supplement 6, wherein the first estimation model is a model that estimates the emotion based on the linguistic information, paralinguistic information, and non-linguistic information.

### Supplement 8

The information processing device according to supplement 6 or 7, wherein:
the first estimation model is a model that divides the voice data into first vector data corresponding to the paralinguistic information and the non-linguistic information and second vector data corresponding to the linguistic information; and
the first estimation model is a model that estimates the emotion based on the first vector data and the second vector data.

### Supplement 9

The information processing device according to any one of supplements 6 to 8, wherein the second estimation model is a model that estimates the emotion based on at least one of paralinguistic information and non-linguistic information.

### Supplement 10

The information processing device according to any one of supplements 6 to 9, wherein the control unit estimates the emotion corresponding to the voice data by inputting the voice data to the second estimation model, when a verbal emotion and an actual emotion do not coincide with each other in a result estimated by the first estimation model.

### Supplement 11

A non-transitory storage medium storing instructions that are executable by one or more processors included in a computer and that cause the one or more processors to perform functions comprising:
acquiring voice data;
determining whether the voice data includes linguistic information; and
estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

### Supplement 12

The non-transitory storage medium according to supplement 11, wherein the first estimation model is a model that estimates the emotion based on the linguistic information, paralinguistic information, and non-linguistic information.

### Supplement 13

The non-transitory storage medium according to supplement 11 or 12, wherein:
the first estimation model is a model that divides the voice data into first vector data corresponding to the paralinguistic information and the non-linguistic information and second vector data corresponding to the linguistic information; and
the first estimation model is a model that estimates the emotion based on the first vector data and the second vector data.

### Supplement 14

The non-transitory storage medium according to any one of supplements 11 to 13, wherein the second estimation model is a model that estimates the emotion based on at least one of paralinguistic information and non-linguistic information.

### Supplement 15

The non-transitory storage medium according to any one of supplements 11 to 14, wherein the functions further comprises estimating the emotion corresponding to the voice data by inputting the voice data to the second estimation model, when a verbal emotion and an actual emotion do not coincide with each other in a result estimated by the first estimation model.

## Claims

1. An emotion estimation method that is executed by an information processing device (10), the emotion estimation method comprising:
acquiring voice data;
determining whether the voice data includes linguistic information; and
estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

2. The emotion estimation method according to claim 1, wherein the first estimation model is a model that estimates the emotion based on the linguistic information, paralinguistic information, and non-linguistic information.

3. The emotion estimation method according to claim 2, wherein:
the first estimation model is a model that divides the voice data into first vector data corresponding to the paralinguistic information and the non-linguistic information and second vector data corresponding to the linguistic information; and
the first estimation model is a model that estimates the emotion based on the first vector data and the second vector data.

4. The emotion estimation method according to claim 1, wherein the second estimation model is a model that estimates the emotion based on at least one of paralinguistic information and non-linguistic information.

5. The emotion estimation method according to claim 1, further comprising estimating the emotion corresponding to the voice data by inputting the voice data to the second estimation model, when a verbal emotion and an actual emotion do not coincide with each other in a result estimated by the first estimation model.

6. An information processing device (10) comprising a control unit (11), wherein
the control unit (11) is configured to
acquire voice data,
determine whether the voice data includes linguistic information, and
estimate an emotion corresponding to the voice data by inputting the voice data to a first estimation model, when the voice data includes the linguistic information, or estimate the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

7. The information processing device (10) according to claim 6, wherein the first estimation model is a model that estimates the emotion based on the linguistic information, paralinguistic information, and non-linguistic information.

8. The information processing device (10) according to claim 7, wherein:
the first estimation model is a model that divides the voice data into first vector data corresponding to the paralinguistic information and the non-linguistic information and second vector data corresponding to the linguistic information; and
the first estimation model is a model that estimates the emotion based on the first vector data and the second vector data.

9. The information processing device (10) according to claim 6, wherein the second estimation model is a model that estimates the emotion based on at least one of paralinguistic information and non-linguistic information.

10. The information processing device (10) according to claim 6, wherein the control unit (11) estimates the emotion corresponding to the voice data by inputting the voice data to the second estimation model, when a verbal emotion and an actual emotion do not coincide with each other in a result estimated by the first estimation model.

11. A non-transitory storage medium storing instructions that are executable by one or more processors included in a computer (10) and that cause the one or more processors to perform functions comprising:
acquiring voice data;
determining whether the voice data includes linguistic information; and
estimating an emotion corresponding to the voice data by inputting the voice data to a first estimation model, when the voice data includes the linguistic information, or estimating the emotion corresponding to the voice data by inputting the voice data to a second estimation model, when the voice data does not include the linguistic information, the first estimation model estimating the emotion based on the linguistic information, the second estimation model estimating the emotion without being based on the linguistic information.

12. The non-transitory storage medium according to claim 11, wherein the first estimation model is a model that estimates the emotion based on the linguistic information, paralinguistic information, and non-linguistic information.

13. The non-transitory storage medium according to claim 12, wherein:
the first estimation model is a model that divides the voice data into first vector data corresponding to the paralinguistic information and the non-linguistic information and second vector data corresponding to the linguistic information; and
the first estimation model is a model that estimates the emotion based on the first vector data and the second vector data.

14. The non-transitory storage medium according to claim 11, wherein the second estimation model is a model that estimates the emotion based on at least one of paralinguistic information and non-linguistic information.

15. The non-transitory storage medium according to claim 11, wherein the functions further comprises estimating the emotion corresponding to the voice data by inputting the voice data to the second estimation model, when a verbal emotion and an actual emotion do not coincide with each other in a result estimated by the first estimation model.
